(19) Europäisches Patentamt

European Patent Office

Office européen des brevets

(11) Veröffentlichungsnummer: **0 445 598 A2**

# (12) EUROPÄISCHE PATENTANMELDUNG

(21) Anmeldenummer: **91102557.5**

(22) Anmeldetag: **21.02.91**

(51) Int. Cl.⁵: **H01L 31/048**, H01L 31/042

(30) Priorität: **08.03.90 DE 4007376**

(43) Veröffentlichungstag der Anmeldung:
**11.09.91 Patentblatt 91/37**

(84) Benannte Vertragsstaaten:
**DE FR GB IT**

(71) Anmelder: **Siemens Solar GmbH**
**Buchenallee 3**
**W-5060 Bergisch Gladbach 1(DE)**

(72) Erfinder: **Bednorz, Klaus**
**Leopoldstrasse 138**
**W-8000 München 40(DE)**
Erfinder: **Riermeier, Manfred**
**Finkenweg 1**
**W-8059 Oberneuching(DE)**

(74) Vertreter: **Fuchs, Franz-Josef, Dr.-Ing.**
**Postfach 22 13 17**
**W-8000 München 22(DE)**

(54) **Laminiertes Solarmodul.**

㊐ Ein lamiminiertes Solarmodul (1) mit zwei räumlich getrennten elektrischen Anschlüssen (3, 4) soll eine einfache Verkabelung mehrerer solcher Solarmodule (1) untereinander ermöglichen und soll außerdem wetterfest sein. An jedem elektrischen Anschluß (3, 4) befindet sich je ein Gehäuse (12). In mindestens ein Gehäuse (12) ist eine Schutzdiode (13) integriert, welche als normalerweise gesperrte Diode im Solarmodul angeordnete Solarzellen, die in Serie geschaltet sind, überbrückt.

FIG 2

Die Erfindung betrifft ein laminiertes Solarmodul mit zwei räumlich getrennten elektrischen Anschlüssen.

Ein laminiertes Solarmodul ist ein Solargenerator, dessen Solarzellen mit zugehörigen elektrischen Anschlüssen und Verbindungsleitungen in einem Verbund aus einem Träger bzw. Rückseitenabdeckung, einer elastischen Schmelzkleberfolie und einer Glasscheibe eingebettet sind. Als Träger bzw. Rückseitenabdeckung kommen eine Glasscheibe, ein Blech, eine Folie oder der gleichen in Frage. Als Glasscheiben kommen gehärtete Glasscheiben in Betracht, durch die eine Reduzierung der Dicke des Generators und seines Gewichtes erzielt werden können. Zwischen dem Träger und der Glasscheibe werden die Solarzellen und die Schmelzkleberfolien eingelegt. Durch einen Temperaturvakuumprozeß werden die Schmelzkleberfolie und die Solarzellen mit dem Träger und der Glasscheibe zu einem Verbund verschmolzen. Die Schmelzkleberfolien bilden nach ihrer Verschmelzung praktisch eine einzige Folie. Als Glasmaterial kommt auch Weißglas in Frage, das im Bereich des Lichtes, für das Solarzellen besonders empfindlich sind, praktisch keine Absorption aufweist. Anstelle der Glasscheibe kann auch eine durchsichtige Folie verwendet werden.

Ein Groß-Solarmodul soll eine Leistung im Kilowatt-Bereich oder eine noch größere Leistung aufweisen. Zu diesem Zweck können mehrere laminierte rahmenlose Solarmodule auf einem gemeinsamen Gestellrahmen montiert und miteinander elektrisch verschaltet werden. Zur Herstellung eines solchen Groß-Solarmoduls ist die Entwicklung einer neuen Technik erforderlich.

Die Verkabelung der einzelnen laminierten Solarmodule untereinander soll einfach und preisgünstig sein und soll außerdem wetterfest sein. Der Aufwand für die Verkabelung der einzelnen laminierten Solarmodule untereinander soll minimiert sein und in einfacher Weise den Aufbau eines Groß-Solarmoduls ermöglichen.

Die zur Verkabelung der einzelnen laminierten Solarmodule vorgesehenen Einrichtungen sollen auch ohne zusätzliche Befestigung nicht im Wind flattern, sollen isolationsgeschützt und feuchtigkeitsisoliert sein, um Korrosion zu verhindern. Die Einrichtung zur Verkabelung der einzelnen laminierten Solarmodule soll außerdem eine einfache Herstellung der laminierten Solarmodule ermöglichen.

Diese Aufgabe wird erfindungsgemäß durch ein laminiertes Solarmodul nach dem Patentanspruch 1 gelöst.

Ausgestaltungen und Vorteile der Erfindung sind in den Unteransprüchen, der Beschreibung und der Zeichnung dargestellt.

Die Erfindung ermöglicht ein laminiertes rahmenloses Solarmodul für die Serienverschaltung bei einem Groß-Solarmodul. Bei der Erfindung wird kein aufwendiger Anschlußkasten auf dem jeweiligen laminierten Solarmodul benötigt.

Bei der Erfindung kann der jeweilige elektrische Anschluß in Form eines kurzen Anschlußkabels oder in Form eines Steckers direkt aus dem Solarmodul herausgeführt werden.

Die Erfindung ermöglicht es in einer Ausgestaltung, daß die laminierten Solarmodule direkt und unmittelbar miteinander zusammengesteckt werden.

Die Erfindung wird im folgenden anhand der Zeichnung näher erläutert.

FIG 1 erläutert die Verschaltung mehrerer laminierter Solarmodule.

FIG 2 und 3 erläutern die Ausführung der elektrischen Anschlüsse.

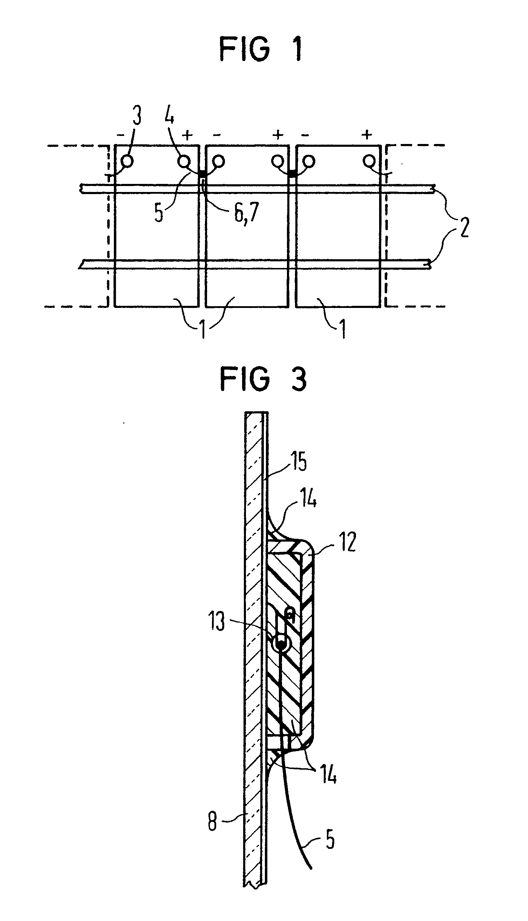

FIG 1 zeigt die Verschaltung mehrerer laminierter rahmenloser Solarmodule 1, die zu einem Groß-Solarmodul auf einem gemeinsamen Gestellrahmen 2 montiert sind und miteinander elektrisch in Reihe geschaltet sind. Jedes laminierte Solarmodul besitzt einen elektrischen Anschluß 3 als Minuspol und einen elektrischen Anschluß 4 als Pluspol. Die elektrischen Anschlüsse 3, 4 sind bei jedem Solarmodul so angeordnet, daß sie räumlich getrennt sind und zueinander innerhalb eines einzelnen Solarmoduls einen sehr viel größeren Abstand aufweisen als ihn jeder elektrische Anschluß zu den ihm am nächsten liegenden Rand des Solarmoduls aufweist. Dabei ist innerhalb eines Solarmoduls 1 je einer der elektrischen Anschlüsse 3, 4 jeweils einem von zwei gegenüberliegenden Rändern des Solarmoduls näher benachbart als dem anderen elektrischen Anschluß.

Im Ausführungsbeispiel nach FIG 1 besitzen die Solarmodule 1 an jedem elektrischen Anschluß 3, 4 jeweils einen kurzen einpoligen Kabelanschluß 5 aus UV- und witterungsbeständigem Material, welcher direkt aus dem Solarmodul 1 herausgeführt ist. Die bei der Reihenschaltung der Solarmodule 1 miteinander zu verbindenden elektrischen Anschlüsse 5 können mit Kabelverbindern 6 z. B. der Firma AMP miteinander verbunden werden. Für diese Kabelverbinder 6 sind z. B. AMP-Plasti-Crip-Isolierhülsen (Parallelverbinder) geeignet, welche gecrimpt und mit einem Schrumpfschlauch 7 überzogen werden. Ein solcher Schrumpfschlauch 7 kann z. B. ein Wärmeschrumpfschlauch ATUM schwarz 1/8 der Firma Raychem sein.

FIG 1 zeigt eine Ansicht der Rückseite der Solarmodule 1.

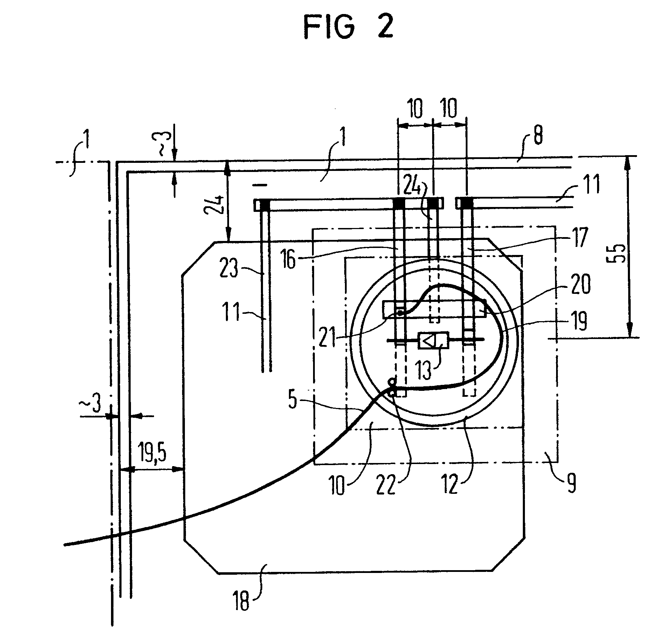

FIG 2 zeigt eine Ansicht der Rückseite eines Solarmoduls 1 im Bereich eines elektrischen Anschlusses 3, 4. Das Solarmodul 1 besitzt eine Glasscheibe 8, die eine Stärke im Bereich einiger Millimeter aufweisen kann. Mit der Glasscheibe verbunden ist ein Schichtaufbau 15 (FIG 3), der eine Schmelzkleberfolie 9, in diese Schmelzkleberfolie 9 eingebettete Solarzellen und eine Rückseitenabdeckung 10 aufweist. Die Schmelzkleberfolie 9 kann eine EVA-Folie sein. Die Rückseitenabdeckung 10 kann eine Tedlar-Folie weiß sein. Außerdem gibt es in dem Schichtaufbau 15 noch die Verbindungsleitungen 11 zur elektrischen Verbindung der Solarzellen untereinander (in der FIG 3 nicht sichtbar). Die elektrischen Verbindungsleitungen 11 können aus Aluminium bestehen.

Jeder elektrische Anschluß 3, 4 besitzt ein Gehäuse 12, welches auf den Schichtaufbau 15 aufgesetzt ist. Das Gehäuse 12 kann aus Kunststoff bestehen und ein Spritzgußteil sein. Innerhalb des Gehäuses 12 befindet sich eine Schutzdiode 13, die parallel zu einzelnen Ketten der in Reihe geschalteten Solarzellen innerhalb des Solarmoduls 1 geschaltet ist, um die Sperrverlustleistung in diesen Solarzellen zu begrenzen. An jedem elektrischen Anschluß 3, 4 sitzt jeweils eine Schutzdiode 13 an der bezüglich der elektrischen Verbindungen 11 innerhalb des Solarmoduls 1 einfachsten Stelle. Dabei wird nur eine einzige Querleitung benötigt, während man ohne diese Anordnung der Schutzdioden 13 an den jeweils einfachsten Stellen Querleitungen in mehreren Ebenen mit den entsprechenden gegenseitigen Isolationseinrichtungen benötigt.

In der schematischen Darstellung der FIG 2 ist eine Solarzelle 18 zu sehen. Die elektrischen Leitungen 16, 17, 23 verlaufen teilweise auf der Rückseite der Solarzelle 18. Die elektrische Leitung 24 verläuft teilweise auf der Vorderseite der Solarzelle 18. Zwischen die beiden Leitungen 16, 17 ist die Schutzdiode 13 geschaltet. Am Lötpunkt 21 auf der Leitung 16 ist das Kabel 5 innerhalb eines Ausschnittes 20 in der Rückseitenfolie des Solarmoduls 1 befestigt. Ein Teil des Kabels 5 zwischen dem Lötpunkt 21 und einem Punkt 22 innerhalb des Gehäuses 12 ist als flexible Leitung 19 ausgeführt, um ein einfaches Aufsetzen des Gehäuses 12 zu ermöglichen. Der Punkt 22 innerhalb des Gehäuses 12 dient zur Zugentlastung des Kabels 5.

In jedem Gehäuse 12 kann eine Schutzdiode 13 angeordnet sein. Weist ein Solarmodul 1 beispielsweise 36 Solarzellen auf, dann kann für jeweils 18 Solarzellen je eine Schutzdiode 13 in einem Gehäuse 12 vorgesehen sein. Wenn weniger als etwa 24 Solarzellen zwischen den beiden elektrischen Anschlüssen 3 und 4 geschaltet sind, genügt auch eine einzige Schutzdiode 13 in einem Gehäuse 12 pro Solarmodul 1.

FIG 3 zeigt einen Querschnitt durch einen Teil des Solarmoduls 1 nach FIG 2. Das Gehäuse 12 wird dabei im Inneren mit Silikon 14 vergossen und mit der Rückseite des Solarmoduls 1 am Ort des elektrischen Anschlusses 3, 4 verklebt. Als Kleber 14 wird bevorzugt Silikon Q3-3744 R.T.V. der Firma Dow Corning verwendet. Bevorzugt wird auch am äußeren Rand des Gehäuses 12 an Übergang zum Schichtaufbau 15 Silikon 14 angebracht.

Die elektrischen Anschlüsse 3, 4 können an der Rückseite des Solarmoduls 1 so angebracht werden, daß bei Verwendung von Steckern anstelle der Kabelanschlüsse 5 unmittelbar nebeneinanderliegende Solarmodule 1 direkt miteinander zusammengesteckt werden können. Dabei können die Stecker solche Toleranzen aufweisen, daß sie thermische Ausdehnungen ausgleichen können. Als Stecker können dabei wasserdichte Rundsteckverbindungen verwendet werden.

## Patentansprüche

1.  Laminiertes Solarmodul (1) mit zwei räumlich getrennten elektrischen Anschlüssen (3, 4) und mit je einem Gehäuse (12) an jedem elektrischen Anschluß (3, 4), wobei in mindestens ein Gehäuse (12) eine Schutzdiode (13) integriert ist, welche als normalerweise gesperrte Diode im Solarmodul angeordnete Solarzellen, die in Serie geschaltet sind, überbrückt.

2.  Solarmodul nach Anspruch 1, **gekennzeichnet durch** Stecker als elektrische Anschlüsse (3, 4) am Rand des Solarmoduls (1), so daß zwei unmittelbar benachbarte Solarmodule (1) über diese Stecker elektrisch miteinander verbindbar sind.

3.  Solarmodul nach Anspruch 1, **gekennzeichnet durch** integrierte Anschlußkabel (5) als elektrische Anschlüsse.

4.  Solarmodul nach einem der Ansprüche 1 bis 3, **dadurch gekennzeichnet,** daß die Gehäuse (12) mit Silikon (14) vergossen sind.

5.  Groß-Solarmodul mit mehreren Solarmodulen (1) nach einem der Ansprüche 1, 3, 4, **dadurch gekennzeichnet,** daß mehrere Solarmodule (1) in Reihe verschaltet sind und daß die Kabelanschlüsse (5) mit Kabelverbindern (6) miteinander verbunden sind.

6.  Groß-Solarmodul nach Anspruch 5, **dadurch gekennzeichnet,** daß die Kabelverbinder (6) mit Schrumpfschläuchen (7) gegen Feuchtigkeit geschützt sind.

7.  Groß-Solarmodul mit mehreren Solarmodulen (1) nach Anspruch 1 oder 2, **dadurch gekennzeichnet,** daß mehrere Solarmodule (1) in Reihe verschaltet sind und über elektrische Stecker direkt miteinander elektrisch verbunden sind.

# FIG 1

# FIG 3

EP 0 445 598 A2

# FIG 2